# EUROPEAN PATENT SPECIFICATION

(11) **EP 1 786 081 B1**
(45) Date of publication and mention of the grant of the patent: **25.06.2008**
(21) Application number: 05425802.5
(22) Date of filing: 14.11.2005
(51) Int. Cl.: H02G 5/06

(54) **End plug for a prefabricated leaktight conduit member for the distribution of electrical power**
Abschluss für eine vorgefertigte dichte Leitungsanordnung zum Verteilen elektrischer Energie
Obturateur d'extrémité pour une installation de barres omnibus étanche destinée à la distribution d'énergie électrique

(43) Date of publication of application: 16.05.2007
(73) Proprietor: BTICINO S.P.A., 20154 Milano (IT)
(72) Inventor: Fabrizi, Fabrizio, 24100 Bergamo (IT)
(74) Representative: Simino, Massimo

(56) References cited:
- WO-A-03/096489
- DE-A1- 3 245 384
- US-A- 5 144 530
- US-B1- 6 186 296

## Description

This invention relates to an end plug or cap for a leaktight prefabricated conduit member for the distribution of electrical power.

It is known that prefabricated conduit members, commonly known as sheathed bus bars or bus ducts, for the distribution of electrical power in buildings, in particular for industrial use or offices, shops, shopping malls and the like, consist of elements of standard lengths, for example 1, 2, 3 metres, which can be connected at their ends so as to obtain the longitudinal length required for each specific application.

Electrical connections to supply users' equipment can then be made at any point along their length.

For example documents US 6 186 296, DE 32 45 384 and US 5 144 530 disclose some kinds of prefabricated conduit members and related accessories, including end caps or plugs, but it has to be noted that no one of such conduits and related accessories is leaktight.

The same is for document WO 03/096489 where, among the related accessories an end electrical connector, not an end cap, is provided, the end connector being housed in a pair of shells of insulating material, joined together and forming an insulating enclosure which too is not leaktight.

These prefabricated members must satisfy many requirements: in addition to the ability to carry heavy currents, of the order of tens of amperes (typically from 25 to 40 A), they must ensure maximum safety in the course of any work done after they have been fitted, and in many types of installations, such as under-floor installation known as "floating" installation, within false ceilings and in all circumstances where there is the risk of possible seepage by water, and they must ensure that they are impervious to liquids, that is they must be leaktight.

Although the requirement for safe working by an operator (or the "finger test requirement") may be satisfied by relatively simple and economic means, such as are for example described in European Patent Application EP 1049227 by the same Applicant, the requirement that the system should be leaktight has so far been satisfied by particularly complex and costly structures which render both installation and subsequent adaptation of the system, such as the addition of new offtakes, the removal of existing offtakes and extension of the system, particularly difficult and laborious.

In European Patent Application EP 1750342 (published on 07.02.2007) filed by the Applicant a prefabricated conduit member which avoids these disadvantages and provides an extremely simple structure, which can be manufactured economically in large volumes and which satisfies the requirements already indicated, has been proposed and described.

For this type of prefabricated member it is however necessary to provide devices, which must also be economical, which ensure in a simple and reliable way that the ends remain watertight, without the need for special tools.

This is necessary to assist the work of installation.

In order that the system may be modified and expanded it is also necessary that the sealing devices necessary to provide a watertight closure at the ends of the prefabricated member should be removable, although permanently attached thereto, without the need for special tools (or at most using only a screwdriver), for replacement with other devices, for example electrical connectors.

This invention resolves these problems and provides a watertight end plug which is permanently fixed to the prefabricated conduit member and at the same time is easily removable through a deliberate action by an operator which rules out any accidental removal. The plug according to this invention is also simple, economical, capable of being manufactured in large volumes, and of small size.

In accordance with the invention these results are achieved through a plug structure as defined in the appended claims.

The features and advantages of the invention will be more apparent from the following description of a preferred embodiment and its variants with reference to the appended drawings in which:
- Figure 1 is an exploded perspective view of a watertight plug and the end of a prefabricated conduit member to which the plug is to be connected,
- Figure 2 is a front view of a watertight seal for the plug in Figure 1,
- Figure 3 is a view in cross-section along the cross-section I-I in Figure 2 of a preferred embodiment of the seal in Figure 2,
- Figure 4 is a frontal view of a variant embodiment of the locking device for the leaktight plug in Figure 1,
- Figure 5 is a rear view of the locking device in Figure 4,
- Figure 6 is a view of the locking device in accordance with the cross-section A-A in Figure 4,
- Figure 7 is a view of the locking device in accordance with the cross-section B-B in Figure 4,
- Figure 8 is a partial detailed view of the plug in figure 1 along the plane joining the two shells forming it, which shows the locking device of Figures 4-7 in diametrical cross-section housed in its seat and set in the locking position,
- Figure 9 is a detailed view similar to that in Figure 8 which shows the locking device in figures 4-7 set in the release position.

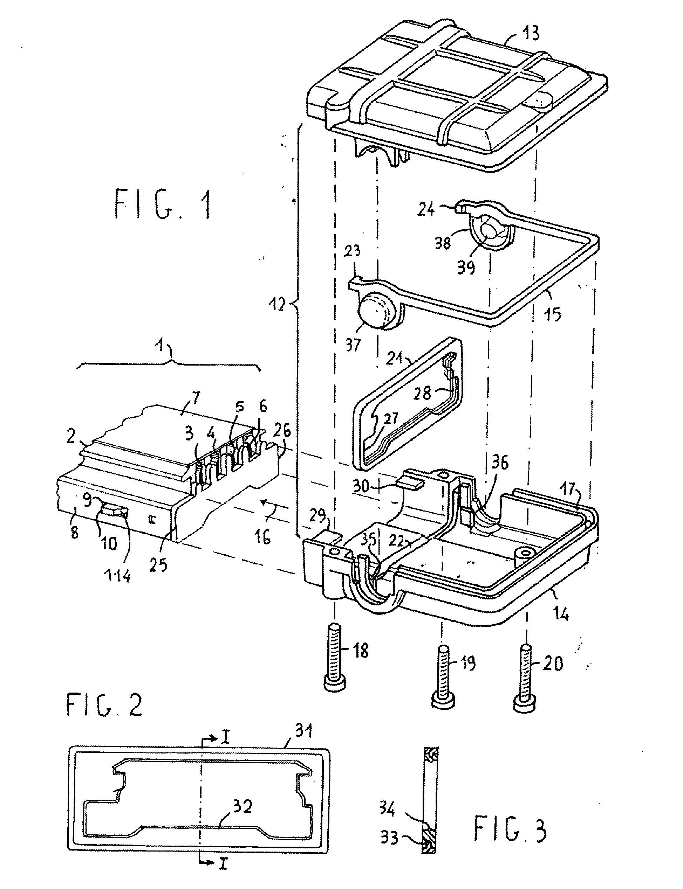

With reference to Figure 1, a brief description of prefabricated conduit member 1 (hereinafter referred to more simply as "conduit") to which the end plug is to be connected must be provided.

For more detailed information on the conduit and a preferred embodiment of the same reference may be made to patent application EP 1750342 already cited.

The conduit comprises a straight extruded body 2 of insulating plastics material (PVC and the like), in which recesses housing conducting bars 3, 4, 5, 6 are formed.

Above, with reference to the view in Figure 1, the recesses are closed off by a plastics sheet 7 so that they are leaktight except at the ends of the conduit.

The bottom part of extruded body 2 is housed in a metal enclosure 8 which is connected to the extruded body over its entire length, with an intermediate space between the extruded body and the metal enclosure.

The joint is leaktight, with the result that the intermediate layer is impervious except at the ends of the conduit. Indicatively the transverse cross-section of the conduit has a height dimension of the order of 15-20 mm and a width dimension of the order of 50-60 mm.

Close to the ends of the conduit metal enclosure 8 has an opening 9 (only one of which is visible in the figure) on each of its lateral surfaces through which a locking tooth 10 extends towards the exterior to permanently lock end devices, such as for example electrical connectors or the plug according to this invention, fitted onto the end of the conduit.

Conveniently locking teeth such as 10 constitute the ends of resilient arms, not visible in the figure, which extend from an end support 11 within the intermediate layer.

End support 11 is permanently fixed to the metal enclosure, for example as described in the patent application already cited.

In order to ensure that the ends of the conduit are leaktight an end plug 12 which is fitted onto the end of the conduit, completely closing it off, including the lateral openings such as 9, is provided.

As illustrated in Figure 1, end plug 12 comprises a pair of shells 13, 14 of insulating plastics material which are joined together with a seal 15, of rubber or other suitable elastomer, inbetween, forming a plastics enclosure which has an open mouth at one end.

The width and height dimensions of the opening are substantially the same as the corresponding dimensions of the conduit, so that end plug 12 can be fitted onto the end of conduit 1 in the direction indicated by arrow 16 with a minimum amount of play.

The two shells 13, 14 are joined together, with consequent tightening of intermediate seal 15 housed in a seat 17 formed in the edge of one of the shells (lower shell 14 in Figure 1), by screws 18, 19, 20 which pass freely through one of shells 14 and engage in corresponding seats in the other shell.

Screws 18, 19 are conveniently located outside the socket of plug 12 so as not to interfere with insertion of the end of the conduit, while third screw 20 is located at the closed end of the plug and passes either inside, as shown, or outside seal 15.

In the situation illustrated in the figure a leaktight joint is ensured by the head of the screw, which hermetically seals the through hole formed in shell 14.

An annular seal 21, having a generally rectangular external profile and an inner profile which is identical to the profile of the transverse cross-section of the conduit, is provided to ensure a leaktight coupling between end plug 12 and the end of the prefabricated conduit member into which it is inserted.

Seal 21 is housed in a seat 22 formed in lower shell 14, close to the opening in the plug and a corresponding seat, which cannot be seen in Figure 1, formed in upper shell 13.

The seal is leaktightly coupled with the ends 23, 24 of seal 15.

In general the transverse cross-section of the conduit has an asymmetrical profile with respect to the longitudinal vertical median section, that is it is mechanically "polarised"; as is known, this arrangement is used to prevent incorrect electrical connection of the conducting bars.

In the conduit in figure 1 polarisation is obtained by providing two limbs 25, 26 extending laterally by different lengths and/or at different heights on the sides of extruded body 2 in which the recesses for housing conductors 3-6 are formed.

Clearly the internal profile of seal 21 is also correspondingly polarised and has two recesses 27, 28 in its sides to house limbs 25, 26 respectively, these in turn having a depth and/or vertical extent corresponding to those of limbs 25, 26.

Mechanical polarisation of the prefabricated conduit members makes it necessary to provide two different end plugs to close each of the two ends of the prefabricated conduit member.

This can be achieved using the same plug structure by simply placing seal 21 in seat 22 as shown in the figure or by rotating it through 180° with respect to a vertical axis.

In practice, in order to avoid damaging seal 21 through incorrectly forcing plug 12 on to one or other end of conduit 1, it is also convenient to polarise plug body 12.

For this purpose two fins 29, 30 which extend towards the interior of the transverse cross-section are formed in at least one of shells 13, 14, shell 14 in Figure 1, in the vicinity of the opening, having different lengths and/or located at different heights on the sides of the opening.

The interference between these fins 29, 30 and limbs 25, 26 of the conduit prevents incorrect coupling of plug 12 and avoids the risk of damaging seal 21.

Figures 2 and 3 show a preferred embodiment of seal 21 in greater detail.

This comprises a cornice 31 of relatively rigid plastics material which acts as a supporting frame for resilient seal 32, of rubber or another suitable elastomer.

Advantageously, in order to ensure better coupling between cornice 31 and resilient portion 32, cornice 31 has a T-shaped cross-section with a limb 33 extending internally, as shown in Figure 3, in this case having a variable length corresponding to the internal profile of the resilient seal, and is embedded therein.

The inner surface of the seal then has a projecting contact lip 34 which is designed to form a leaktight coupling with the end of the conduit and in particular with the various members comprising it, such as insulating sheet 7 closing off the spaces, the exposed sides of insulating body 2 and metal enclosure 8.

Another aspect may now be considered with reference to Figure 1.

In order to ensure a permanent coupling between plug 12 and the end of conduit 1, two stop abutments 35, 36 are formed in shell 14 on the opposite sides of the shell and in a position inside the enclosure relative to seat 22 for seal 21.

When the end of conduit 1 is inserted into the enclosure formed by plug 12, locking teeth such as 10, provided with an inclined entry plane 114, move yieldably over the sides of shell 14 and abutments 35, 36 without interfering with seal 21.

Once the abutments have been passed, they snap open and abut against them, ensuring that the coupling is permanent through interference with them.

If plug 12 has to be removed from the end of the conduit it is necessary to act on the teeth, such as 10, pushing them towards the interior of enclosure 8 and thus overcoming the interference.

With this object two push-buttons 37, 38 housed with their peripheral portions acting as a leaktight seal in a suitable seat formed in shells 13 and 14 are formed of one piece with seal 15.

Essentially push-buttons 37, 38 are in the form of small cups, with a diameter of the order of 10-15 mm, which open towards the interior of the plastics enclosure and extend somewhat outwardly of the two shells 13, 14, being therefore accessible to be readily pressed together through the index finger and thumb of the hand of an operator gripping plug 12 to remove it from the end of the conduit.

Centrally within the cups there is a core 39 which exerts a thrust action on the conduit's locking tooth, disengaging it from the abutment.

A rigid plastics or metal insert may conveniently be provided in core 39.

The need to operate jointly on both the push-buttons in order to disengage the locking devices eliminates or at least reduces to a minimum the risk of accidental release of the locking devices.

The above description relates only to a preferred embodiment, but it is clear that many variants may be applied.

For example, as a replacement for the polarising devices comprising tongues 29, 30 (Figure 1) formed of one piece of one of the shells, a rigid template of plastics material, identical in shape to seal 21 and housed in a similar seat to that for the seal formed very close to the opening of plug 12, may be provided.

With the template and seal 21 in their corresponding seats, in one way or the other (that is rotated through 180° relative to a vertical axis), polarisation of the plug is achieved for use with one or other end of the conduit.

In this way it is not necessary to diversify any of shells 13, 14, thus simplifying the process for their manufacture without thereby rendering the process of assembling the plugs more complex.

Another possible variant consists of providing two resilient push-buttons such as 37, 38 formed separately from seal 15 and fitted as sealing plugs into the two openings formed in one or other of sides of shell 14 respectively.

In this case seal 15 and tightening screws 18, 19, 20 may be superfluous and a leaktight join between the two shells 13, 14 may be obtained by thermally bonding the edges in contact.

Further variants are possible and preferable for mass production.

Large production volumes make it economically convenient to use composite moulds to form cornice 31 of seal 21 in one piece with one of two shells 13 or 14 and to form resilient seal 32 itself through an immediately subsequent moulding process.

The double moulding process is commonly referred to as co-moulding.

Leaktight joining of the two shells 13, 14 is in this case preferably achieved by thermal bonding.

In order to render the permanent coupling between plug 12 and the end of conduit 1 even more secure and to ensure that disconnection takes place through a deliberate act by the operator, disconnection may be subjected to the use of a tool, such as an ordinary screwdriver.

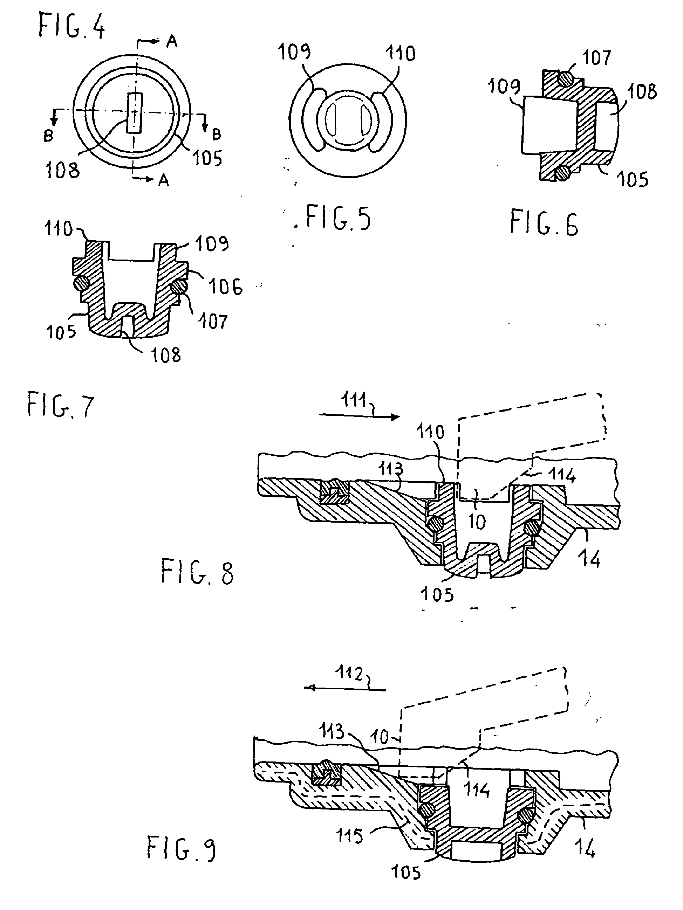

In this case locking push-buttons 37, 38 are conveniently each replaced by a rotating bolt locking/release device as illustrated in Figures 4 to 7.

Making reference to these figures jointly the device comprises a small cylindrical cup 105, preferably but not necessarily of rigid plastics material, with an outwardly extending lip forming a positioning flange 106 which is inserted into an appropriate seat formed in the two shells of the plug and axially securing the cup, only permitting axial rotation.

A resilient ring 107 or O-ring acting as a leaktight seal is located on the periphery of cup 105, adjacent to flange 106.

In the case where seal 15 is present (Figure 1), resilient ring 107 may be formed of one piece with seal 15.

The variant described is in fact suitable for use both in the case where the two shells of the plug are joined together with an intermediate seal 15, and in the case where they are joined together directly by thermal bonding.

A groove 108 is formed in the base of cup 15 corresponding to the part of the device exposed to the exterior of the shells forming the plug, for insertion of the end of a screwdriver.

Two teeth 109, 110, which are radially opposite and symmetrically opposite with respect to the direction of groove 108, extend in the axial direction of the cup from flange 106.

With the cup in an angular position in which groove 108 is located perpendicularly to the direction in which the end of the conduit is inserted/extracted into/from the plug, one of the two teeth constitutes a bolt having a function equivalent to that of abutments 35, 36 (Figure 1).

With the cup in an angular position in which groove 108 lies in the direction in which the end of the conduit is inserted/extracted into/from the connector, teeth 109, 110 are located laterally with respect to the locking tooth, on the sides thereof, and allow the end of the conduit to be slid out from the plug.

Figures 8 and 9 clearly show this aspect.

In the partial detail view in Figure 8 locking/unlocking device 105 is housed in the seat formed in the shell 14 in the locking position with groove 108 located perpendicularly to the plane of the figure and teeth 109, 110 aligned in the direction of insertion/extraction.

When the end of the conduit is inserted into the plug, in the direction indicated by arrow 111, tooth 10 moves yieldably within the side of shell 14 and after passing tooth 110 snaps into the undeformed stop position.

In Figure 8 tooth 10 is shown in this position by a dashed line, as a result of which the movement of tooth 10 in the opposite direction to arrow 111 is prevented through the interference between the same and tooth/bolt 110 of the locking device.

In order to overcome this interference and permit the end of the conduit to be extracted from the plug it is sufficient to rotate the locking device through 90° (in either the clockwise or anticlockwise direction) so as to line up groove 108 with the direction of extraction.

In Figure 9 the locking device is illustrated in this position, with the bolt teeth, only one of which, 110, is visible, located laterally on the sides of locking tooth 10.

In this situation locking tooth 10 can move freely over flange 106 in the direction of extraction indicated by arrow 112 and can continue to move yieldably over an inclined guide plane 113 formed internally on the side of shell 14.

It should in fact be noted that, unlike the embodiment illustrated in Figure 1, in which the pressure exerted by push-button 37 on locking tooth 10 causes it to retract resiliently, in this case tooth 10 is not forced into the retracted position by locking/unlocking device 105 but by the internal wall of shell 14, which is conveniently shaped (guide plane 113) to achieve the same effect and prevent tooth 10 from interfering with seal 21 and damaging it.

As already mentioned, locking device 105 can be used in both the situation in which the shells are joined together with an intermediate seal or that in which the shells are thermally bonded.

Figure 9 indicates the preferred zone in which thermal bonding may be performed, by means of dashed line 115.

Finally it should be noted that a further variant is possible: although locking may take place through the interference between tooth 10 and abutments 35, 36 (Figure 1), device 105 may have only an unlocking function.

For this purpose it is sufficient to provide two cam-profiled projections with an inclined entry plane as a replacement for teeth 109, 110, which press tooth 10 inwards when cup 105 is in an angular position and leave it in its resting position in a second position rotated through 90°.

## Claims

1. End plug for a prefabricated conduit member (1) of the type in which an insulating body (2) houses a plurality of conductors (3, 4, 5, 6) in recesses hermetically sealed by a sheet of insulating material (7) over their entire length, with the exception of their ends, and the insulating body is partly enclosed over its entire length by a metal enclosure (8), from the sides of which there extend retractable locking teeth (10), close to the ends, said plug comprising a pair of shells (13, 14) of insulating plastics material joined together and forming an insulating enclosure with an open mouth, said plug being **characterised in that** said shells are joined together in a leaktight manner and **in that** said plug further comprises:
- a first seal (21) housed in said enclosure, close to said mouth, for leaktight coupling with the end of a first prefabricated conduit member (1) inserted into said enclosure through said mouth,
- engaging means (35, 36, 109, 110) in said insulating enclosure, in a position which is more internal with respect to said first seal (21) and acting together with said locking teeth (10) to provide permanent engagement between said plug and said end of the prefabricated conduit member (1), and
- disengaging means (37, 38, 39, 105) which can be operated from the exterior of said insulating enclosure to disengage said locking teeth (10) from said engaging means (35, 36, 109, 110).

2. Plug according to claim 1, in which said engaging means comprise abutments (35, 36) formed within the sides of one of the shells and said disengaging means comprise at least one pair of resilient push-buttons (37, 38) located opposite each other on the opposite sides of said insulating enclosure to press said locking teeth (10) into a retracted position.

3. Plug according to claim 2, in which said shells are joined together by tightening screws (18, 19, 20) with a second intermediate seal (15) and the said resilient push-buttons (37, 38) are formed of one piece with the said seal.

4. Plug according to claim 2 or 3, in which the said resilient push-buttons (35, 36) comprise a rigid insert housed in a central core (39) of the said push-buttons.

5. Plug according to claim 1 in which the said engaging and disengaging means comprise a pair of cups (105) rotatably and leaktightly housed on opposite sides of the said enclosure and provided with teeth (109, 119) which when the said cups are in an angular position act as bolts on the said locking teeth (10).

6. Plug according to claim 1 in which the said engaging means comprise abutments (35, 36) formed internally on the sides of one of the shells and the said disengaging means comprise a pair of cups (105) rotatably and leaktightly housed on the opposite sides of the said enclosure and provided with cams extending internally within the said enclosure which when the said cups are in an angular position press the said locking teeth (10) into a retracted position disengaging them from the said abutments (35, 36).

7. Plug according to claims 1, 2, 5 or 6, in which the said shells (13, 14) are joined together leaktightly by thermal bonding.

8. Plug according to any one of the preceding claims, in which the said first seal (21) comprises an outer cornice (31) of rigid plastics material, with a generically rectangular external profile supporting a resilient seal (32) having an internal profile which is identical to the profile of the transverse cross-section of the said conduit.

9. Plug according to claim 8, in which the said first seal (31, 32) is co-moulded as one piece with one of the said shells.

10. Plug according to any one of the preceding claims, comprising means (21, 27, 28, 29, 30) for mechanically polarising the said insulating enclosure.

## Patentansprüche

1. Endstecker für ein vorgefertigtes Leiterelement (1) von der Art, bei der ein isolierender Körper (2) eine Mehrzahl von Leitern (3, 4, 5, 6) in Aussparungen aufnimmt, die durch ein Blatt aus Isolierendem Material (7) mit der Ausnahme ihrer Enden über ihre gesamte Länge hermetisch abgedichtet sind, und der isolierende Körper über seine gesamte Länge durch eine Metallumhüllung (8) teilweise umhüllt ist, von deren Seiten sich dort zurückziehbare Verschlusszähne (10) nahe der Enden erstrecken, wobei der Stecker ein Paar miteinander verbundener Schalen (13, 14) aus Isolierendem Kunststoffmaterial umfasst und eine Isolierenden Umhüllung mit einer offener Mündung bildet, wobei der Stecker
**dadurch gekennzeichnet ist, dass** die Schalen in einer leckdichten Weise verbunden sind und dass der Stecker weiter umfasst:
- eine erste Dichtung (21), die in der Umhüllung in der Nähe der ersten Mündung aufgenommen ist ,zum leckdichten Koppeln mit dem Ende eines ersten vorgefertigten Leiterelements (1), das durch die Mündung in die Umhüllung eingefügt ist,
- Kuppelmittel (35, 36, 109, 110) in der isolierenden Umhüllung, bei einer Stelle, die sich in Bezug auf die erste Dichtung (21) interner befindet, und die mit den Verschlusszähnen (10) zusammenwirken, um permanente Kupplung zwischen dem Stecker und dem Ende des vorgefertigten Leiterelements (1) bereitzustellen, und
- Entkuppelmittel (37, 38, 39, 105), die vom Äußeren der isolierenden Umhüllung betrieben werden können, um die Verschlusszähne (10) von den Kuppelmitteln (35, 36, 109, 110) zu entkuppeln.

2. Stecker gemäß Anspruch 1,
wobei die Kuppelmittel Anschläge (35, 36) umfassen, die Innerhalb der Seiten einer der Schalen gebildet sind, und die Entkuppelmittel wenigstens ein Paar elastischer Druckknöpfe (37, 38) umfassen, die einander gegenüber an gegenüberliegenden Seiten der isolierenden Umhüllung angeordnet sind, um die Verschlusszähne (10) in eine zurückgezogene Position zu drücken.

3. Stecker gemäß Anspruch 2,
wobei die Schalen durch Dichtungsschrauben (18, 19, 20) mit einer zweiten Zwischendichtung (15) miteinander verbunden sind und die elastischen Druckknöpfe (37, 38) aus einem Stück mit der Dichtung gebildet sind.

4. Stecker gemäß Anspruch 2 oder 3,
wobei die elastischen Druckknöpfe (35, 36) einen starren Einsatz umfassen, der in einem zentralen Kern (39) der Druckknöpfe aufgenommen ist.

5. Stecker gemäß Anspruch 1,
wobei die Kuppel- und Entkuppelmittel ein Paar Näpfe (105) umfassen, die drehbar und leckdicht an gegenüberliegenden Seiten der Umhüllung aufgenommen sind und mit Zähnen (109, 119) bereitgestellt sind, die als Bolzen auf die Verschlusszähne (10) wirken, wenn die Näpfe sich in einer Winkelposition befinden.

6. Stecker gemäß Anspruch 1,
wobei die Kuppelmittel Anschläge (35, 36) umfassen, die intern an den Seiten einer der Schalen gebildet sind, und die Entkuppelmittel wenigstens ein Paar Näpfe (105) umfassen, die drehbar und leckdicht an gegenüberliegenden Seiten der Umhüllung aufgenommen sind und mit Nocken bereitgestellt sind, die sich intern in der Umhüllung erstrecken, die, wenn die Näpfe sich in einer Winkelposition befinden, die Verschlusszähne (10) in eine zurückgezogene Position drücken,
wobei sie von den Anschlägen entkuppelt werden.

7. Stecker gemäß Anspruch 1, 2, 5 oder 6,
wobei die Schalen (13, 14) miteinander leckdicht durch thermisches Binden verbunden sind.

8. Stecker gemäß einem der vorhergehenden Ansprüche,
wobei die erste Dichtung (21) einen äußeren Sims (31) aus starrem Kunstoffmaterial umfasst, mit einem generisch rechteckigen Außenprofil, das eine elastische Dichtung (32) unterstützt, die ein Innenprofil aufweist, das mit dem Profil des transversalen Querschnitts des Leiters übereinstimmt.

9. Stecker gemäß Anspruch 8,
wobei die erste Dichtung (31, 32) mit einer der Schalen als ein Stück zusammen geformt ist.

10. Stecker gemäß einem der vorhergehenden Ansprüche,
der Mittel (21, 27, 28, 29, 30) zum mechanischen Polarisieren der isolierenden Umhüllung umfasst.

## Revendications

1. Obturateur d'extrémité pour un élément de conduit préfabriqué (1) du type dans lequel un corps isolant (2) loge une pluralité de conducteurs (3, 4, 5, 6) dans des évidements hermétiquement scellés par une feuille de matériau isolant (7) sur toute leur longueur, à l'exception de leurs extrémités, et le corps isolant est en partie enfermé sur toute sa longueur par une enceinte métallique (8), des côtés de laquelle s'étendent des dents de verrouillage rétractables (10), proches des extrémités, ledit obturateur comprenant une paire de coques (13, 14) en matière plastique isolante reliées l'une à l'autre et formant une enceinte isolante dotée d'une embouchure ouverte, ledit obturateur étant **caractérisé en ce que** lesdites coques sont reliées l'une à l'autre de manière étanche et **en ce que** ledit obturateur comprend en outre :
- un premier joint (21) logé dans ladite enceinte, proche de ladite embouchure, en vue d'un couplage étanche avec l'extrémité d'un premier élément de conduit préfabriqué (1) inséré à l'intérieur de ladite enceinte à travers ladite embouchure,
- des moyens de mise en prise (35, 36, 109, 110) dans ladite enceinte isolante, dans une position qui est plus interne par rapport au dit premier joint (21) et agissant conjointement avec lesdites dents de verrouillage (10) pour fournir une mise en prise permanente entre ledit obturateur et ladite extrémité de l'élément de conduit préfabriqué (1), et
- des moyens de dégagement (37, 38, 39, 105) qui peuvent être actionnés depuis l'extérieur de ladite enceinte isolante pour dégager lesdites dents de verrouillage (10) desdits moyens de mise en prise (35, 36, 109, 110).

2. Obturateur selon la revendication 1, dans lequel lesdits moyens de mise en prise comprennent des butées (35, 36) formées à l'intérieur des côtés d'une des coques et lesdits moyens de mise en prise comprennent au moins une paire de boutons-poussoirs élastiques (37, 38) situés à l'opposé l'un de l'autre sur les côtés opposés de ladite enceinte isolante pour presser lesdites dents de verrouillage (10) dans une position rétractée.

3. Obturateur selon la revendication 2, dans lequel lesdites coques sont reliées l'une à l'autre par des vis de serrage (18, 19, 20) avec un second joint intermédiaire (15) et lesdits boutons-poussoirs élastiques (37, 38) constituent avec ledit joint une seule pièce.

4. Obturateur selon la revendication 2 ou 3, dans lequel lesdits boutons-poussoirs élastiques (35, 36) comprennent un insert rigide logé dans un noyau central (39) desdits boutons-poussoirs.

5. Obturateur selon la revendication 1 dans lequel lesdits moyens de mise en prise et de dégagement comprennent une paire de coupelles (105) logées de manière étanche sur les côtés opposés de ladite enceinte en étant rotatives et, pourvues de dents (109, 119) qui, lorsque lesdites coupelles se trouvent dans une position angulaire, agissent comme des boulons sur lesdites dents de verrouillage (10).

6. Obturateur selon la revendication 1 dans lequel lesdits moyens de mise en prise comprennent des butées (35, 36) formées à l'intérieur des côtés d'une des coques et lesdits moyens de dégagement comprennent une paire de coupelles (105) logées de manière étanche sur les côtés opposés de ladite enceinte en étant rotatives et pourvues de came s'étendant de manière interne à l'intérieur de ladite enceinte qui, lorsque lesdites coupelles se trouvent dans une position angulaire, pressent lesdites dents de verrouillage (10) dans une position rétractée les dégageant desdites butées (35, 36).

7. Obturateur selon l'une quelconque des revendications 1, 2, 5 ou 6, dans lequel lesdites coques (13, 14) sont reliées l'une à l'autre de manière étanche par collage thermique.

8. Obturateur selon l'une quelconque des revendications précédentes, dans lequel ledit premier joint (21) comprend une corniche externe (31) en matière plastique rigide, avec un profilé externe généralement rectangulaire supportant un joint élastique (32) présentant un profilé interne qui est identique au profilé de la section transversale dudit conduit.

9. Obturateur selon la revendication 8, dans lequel ledit premier joint (32) est co-moulé avec une desdites coques en formant une seule pièce.

10. Obturateur selon l'une quelconque des revendications précédentes, comprenant des moyens (21, 27, 28, 29, 30) pour polariser mécaniquement ladite enceinte isolante.
